# EUROPÄISCHE PATENTSCHRIFT

(11) **EP 0 556 634 B1**
(45) Veröffentlichungstag und Bekanntmachung des Hinweises auf die Patenterteilung: **02.05.1997**
(21) Anmeldenummer: 93101615.8
(22) Anmeldetag: 03.02.1993
(51) Int. Cl.: A01B 61/02, A01B 71/06

(54) **Landwirtschaftliche Maschine**
Agricultural implement
Machine agricole

(30) Priorität: 13.02.1992 DE 4204170
(43) Veröffentlichungstag der Anmeldung: 25.08.1993
(60) Teilanmeldung: 96114857.4
(73) Patentinhaber: Amazonen-Werke H. Dreyer GmbH & Co. KG, D-49205 Hasbergen (DE)
(72) Erfinder: Dreyer, Heinz, Dipl.-Ing. Dr., W-4507 Hasbergen (DE); Bresch, Robert, W-4550 Bramsche (DE)

(56) Entgegenhaltungen:
- EP-A- 0 003 368
- EP-A- 0 445 439
- DE-A- 2 043 908
- DE-A- 4 040 652

## Beschreibung

Die Erfindung betrifft eine landwirtschaftliche Maschine gemäß des Oberbegriffes des Patentanspruches 1.

Eine derartige Maschine ist in der DE-A-2043908 beschrieben.

Bei dieser Maschine ist das Eingangsgehäuse in Richtung der Drehachse der Eingangswelle, an dem die Gelenkwelle angeschlossen ist, ausweichbar angeordnet. Hierdurch wird die Gefahr der Beschädigung ausgeschlossen, wenn die Gelenkwelle zu lang ist, denn das Eingangsgehäuse kann gegen die Kraft der Feder verschoben werden. Diese elastisch ausweichbare Anordnung des Eingangsgehäuses hat sich in der Praxis bewährt.

Diese elastisch ausweichbare Anordnung des Eingangsgehäuses läßt sich jedoch nicht bei allen landwirtschaftlichen Maschinen verwirklichen, insbesondere wenn hinter dem Eingangsgehäuse unmittelbar eine Quertraverse des Rahmens angeordnet ist.

Der Erfindung liegt nun die Aufgabe zugrunde, auf einfache Weise Beschädigungen an dem die Eingangswelle tragenden Gehäuse und dem Maschinenrahmen auch dann zu vermeiden, wenn keine Ausweichmöglichkeit der Eingangswelle in Richtung der Drehachse der Eingangswelle besteht.

Diese Aufgabe wird erfindungsgemäß durch die Maßnahmen gemäß des kennzeichnenden Teiles des Anspruches 1 gelöst. Infolge dieser Maßnahmen wird eine Beschädigung der Gelenkwelle sowie des Eingangsgehäuses der Maschinen bei zu langer Gelenkwelle vermieden, wobei bei einem Ausweichen des Eingangsgehäuses in der zweiten Sicherungsstufe ein Signal abgegeben werden kann.

Das Eingangsgehäuse kann zunächst in der ersten Sicherungsstufe verschwenken, wobei immer noch ein reibungsloses betreiben der Maschine möglich ist. Erst wenn die weitere Stufe der Sicherungseinrichtung in Funktion tritt, wird ein Alarm ausgelöst, um auf die Gefahr der Beschädigung der Maschine aufmerksam zu machen, wenn die Gelenkwelle eingeschaltet wird.

In einer Ausführungsform ist vorgesehen, daß die erste Stufe der Sicherungseinrichtung von einer Reibschlußverbindung und die zweite Stufe der Sicherungseinrichtung von zumindest einem Abscherelement gebildet wird. Somit kann in der ersten Stufe der Sicherungseinrichtung das Eingangsgehäuse aufgrund der Reibschlußverbindung bis zum Beginn der zweiten Stufe ausweichen. In der weiteren Stufe wird dann mit einem starken Knall das Abscherelement abgeschert. Dieses ist der Hinweis darauf, daß die Gelenkwelle gekürzt werden muß.

In einer anderen Ausführungsform ist vorgesehen, daß die erste Stufe der Sicherungseinrichtung von einem federnden Element und die zweite Stufe von zumindest einem Abscherelement gebildet wird. Im Vergleich zu der anderen Ausführungsform kann das Eingangsgehäuse gegen das federnde Element bis zum Beginn der zweiten Stufe, die von dem Abscherelement gebildet wird, verschwenkt werden.

In einer weiteren Ausführungsform ist vorgesehen, daß an Stelle des Abscherelementes eine Alarmeinrichtung vorgesehen ist. Diese Alarmeinrichtung kann beispielsweise von einem Sensor oder Schalter betätigt werden.

Aufgrund der Tatsache, daß für das Abscherelement ein Langloch oder mehrere Bohrungen vorgesehen sind, ist es möglich, daß Eingangsgehäuse in unterschiedlichen Positionen am Rahmen der Maschine zu fixieren. Infolge dieser Maßnahmen wird erreicht, daß die Eingangswelle auch bei schräg angebauter Maschine immer horizontal ausgerichtet werden kann.

Um bei Maschinen, die in unterschiedlichen Schrägstellungen am Schlepper aufgrund der Einsatzverhältnisse schräg gestellt angebaut werden müssen, ist vorgesehen, daß das Eingangsgehäuse mittels der Sicherungseinrichtung in unterschiedlichen Stellungen am Rahmen der Maschine zu fixieren ist. Infolge dieser Maßnahme ist es auf einfachste Weise möglich, das Eingangsgehäuse so am Rahmen der Maschine zu befestigen, daß die Eingangswelle horizontal ausgerichtet ist. Dieses ist bei dem Antrieb der Maschinen über eine Gelenkwelle von großer Bedeutung, damit kein Ungleichförmigkeitsgrad beim Antrieb der Gelenkwelle auftritt.

Um das Eingangsgehäuse einfach am Rahmen der Maschine montieren zu können, ist vorgesehen, daß das Eingangsgehäuse mit einem Schnellverschuß am Rahmen angeordnet ist.

Um auf einfachste Weise eine Beschädigung des Eingangsgehäuses zu vermeiden, ist vorgesehen, daß zwischen der Gelenkwelle und der Eingangswelle ein in axialer Richtung der Welle verschiebbares Element angeordnet ist, welches mittels eines Abscherstiftes auf der Gelenkwelle festgesetzt ist.

Weitere Einzelheiten der Erfindung sind den übrigen Unteransprüchen, der Beispielsbeschreibung und den Zeichnungen zu entnehmen. Hierbei zeigen
- Fig. 1: einen an einen Ackerschlepper angebauten Zentrifugaldüngerstreuer in der Seitenansicht und in Prinzipdarstellung,
- Fig. 2: den Zentrifugaldüngerstreuer in Seitenansicht und vergrößertem Maßstab,
- Fig. 3: den Zentrifugaldüngerstreuer in der Vorderansicht,
- Fig. 4: das Eingangsgetriebegehäuse in der Seitenansicht, in der Ansicht IV - IV,
- Fig. 5: das Eingangsgehäuse im eingebauten Zustand in der Ansicht V - V,
- Fig. 6: das Eingangsgetriebe im eingebauten Zustand in der Ansicht VI - VI,
- Fig. 7: der an einem Ackerschlepper angebaute Zentrifugaldüngerstreuer mit angekuppelter Gelenkwelle in abgesetztem Zustand in Prinzipdarstellung,
- Fig. 8: der bis zu der ganz zusammengeschobenen Stellung der Gelenkwelle angehobene Zentrifugaldüngerstreuer in Prinzipdarstellung,
- Fig. 9: der weiter angehobene Zentrifugaldüngerstreuer in Prinzipdarstellung,
- Fig. 10: der weiter angehobene Zentrifugaldüngerstreuer mit abgeschertem Sicherungselement,
- Fig. 11: ein in Arbeitsstellung schräg angebauter Zentrifugaldüngerstreuer an einen Ackerschlepper in Seitenansicht und Prinzipdarstellung,
- Fig. 12: die Ausrichtung des Eingangsgehäuses gegenüber dem Rahmen der Maschine bei schräg angebautem Zentrifugaldüngerstreuer,
- Fig. 13: das Eingangsgetriebe im eingebauten Zustand mit einer anderen Aufhängung,
- Fig. 14: das Eingangsgetriebe in Seitenansicht in eingebautem Zustand,
- Fig. 15: das Eingangsgetriebe im eingebauten Zustand mit einer weiteren Aufhängungsvorrichtung und
- Fig. 16: ein Eingangsgetriebe mit einen als Schiebemuffe ausgebildeten Anschlußstück für die Gelenkwelle in Seitenansicht und in Prinzipdarstellung.

Die als Zentrifugaldüngerstreuer 1 ausgebildete landwirtschaftliche Maschine ist an den Dreipunktkraftheber 2 des Ackerschleppers 3 in bekannter Weise angeordnet. Der Zentrifugaldüngerstreuer 1 weist den Vorratsbehälter 4 und den Rahmen 5 auf. An der Vorderseite des Rahmens 5 befinden sich das obere Dreipunktkupplungselement 6 und die beiden unteren Kupplungselemente 7, über welche der Zentrifugaldüngerstreuer 1 an den Dreipunktkraftheber 2 des Ackerschleppers 3 in bekannter Weise angebaut wird. Der Rahmen 5 weist die hintere Quertraverse 8 auf. Die hintere Quertraverse 8 ist als U-Profil ausgebildet. Die hintere Quertraverse 8 ist über die beiden nach hinten ragenden Längsstreben 9 mit dem Vorderteil 10 des Rahmens 5 verbunden. An den beiden äußeren Enden der Quertraverse 8 sind jeweils die Winkelgetriebe 11 angeordnet. Auf den aufrechten Ausgangswellen 12 der Winkelgetriebe 11 ist jeweils eine Schleuderscheibe 13 mit Wurfschaufeln 14 angeordnet. Den Schleuderscheiben 13 wird aus dem Vorratsbehälter 4 das sich in diesem befindliche Material den Schleuderscheiben 13 über Dosierelemente in einstellbarer Weise zudosiert. Die Schleuderscheiben 13 verteilen dann das zudosierte Material mit ihren Wurfschaufeln 14 in Breitverteilung auf der Bodenoberfläche.

In der Mitte der Quertraverse ist an dieser das Eingangsgetriebe 15 angeordnet. Das Eingangsgetriebe 15 weist das Eingangsgehäuse 16 und auf seiner Vorderseite die Eingangswelle 17 auf. Seitlich treten aus dem Gehäuse 16 des Eingangsgetriebes 15 die Wellen 18 heraus, über welche die Schleuderscheiben 13 mittels der Verbindungswellen 19 und Winkelgetriebe 11 rotierend angetrieben werden. An die Eingangswelle 17 ist die Gelenkwelle 20 angeschlossen, welche schlepperseitig an die Zapfwelle 21 des Schleppers 3 angeschlossen ist.

Das Eingangsgehäuse 16 des Eingangsgetriebes 15 ist mittels der beiden Halterungen 22 und 23 am Rahmen 5 der Maschine 1 befestigt. Die Halterung 22 wird von dem Kettenschacht 24 gebildet, welcher zwischen der Quertraverse 8 und dem Vorratsbehälter 4 angeordnet ist. Im unteren Bereich des Kettenschachtes 24 befindet sich die Aufnahmeöffnung 25 zur Aufnahme des Eingangsgehäuses 16 des Eingangsgetriebes 15. Auf der anderen Seite des Eingangsgehäuses 16 ist die eine U-förmige Aufnahmeöffnung 26 aufweisende Halterungslasche 23 angeordnet, in welcher das Eingangsgehäuse 16 liegt. In dieser Lasche 23 wird das Eingangsgehäuse 16 mittels der Federspange 27 gehalten.

An dem Eingangsgehäuse 16 befindet sich der Halterungssteg 28 mit den beiden Bohrungen 29 und 30. In Verlängerung der oberen Bohrung 29 ist in der von dem Kettenschacht 24 gebildeten Halterung 22 das bogenförmige Langloch 31 angeordnet. Durch die Bohrung 29 in dem Steg 28 und dem Langloch 31 in dem Kettenschacht 24 ist der Schraubbolzen 32 gesteckt. Auf dem Schraubbolzen 32 ist die Tellerfeder 33 und die selbstsichernde Mutter 34 angeordnet. Durch Anziehen der Mutter 34 ergibt sich zwischen dem Steg 28 und der von dem Kettenschacht 24 gebildeten Halterung 22 eine Reibflußverbindung 35. Durch die untere kleinere Bohrung 30 in dem Steg 28 und durch die sich im Kettenschacht 24 in Verlängerung dieser Bohrung 30 befindlichen kleineren Langlochbohrung 36 ist das Abscherelement 37 gesteckt. Dieses Abscherelement 37 kann beispielsweise als Schraube oder Stift ausgebildet sein. Die Reibflußverbindung 35 und das Abscherelement 37 bilden die mehrstufige Sicherungseinrichtung für das Eingangsgehäuse 16.

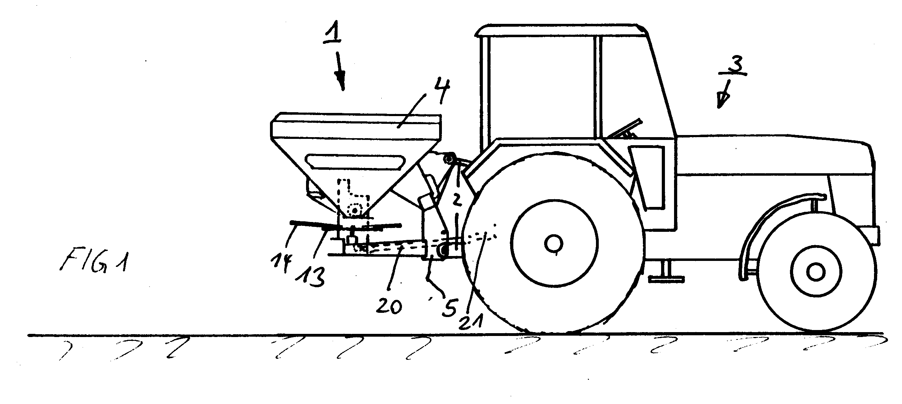

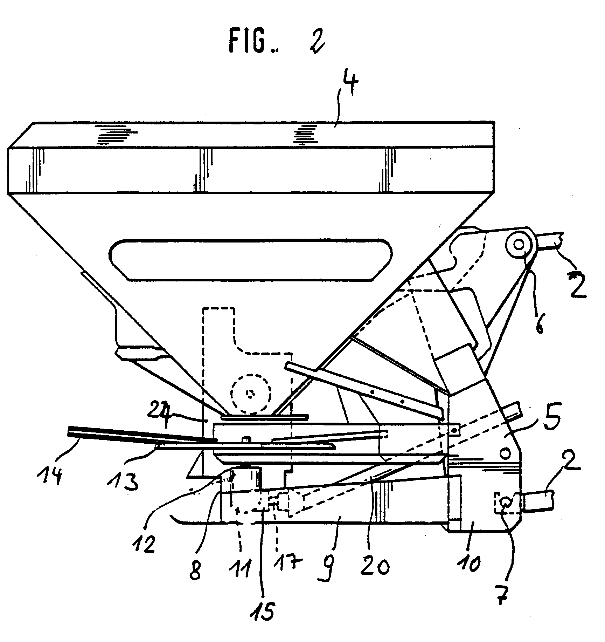

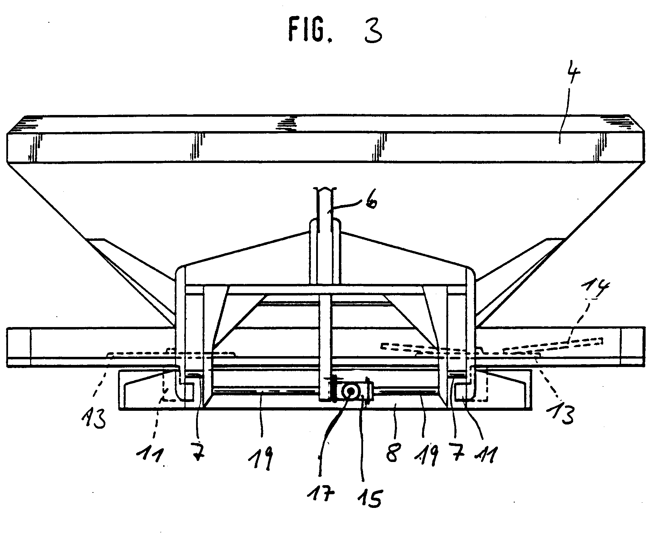

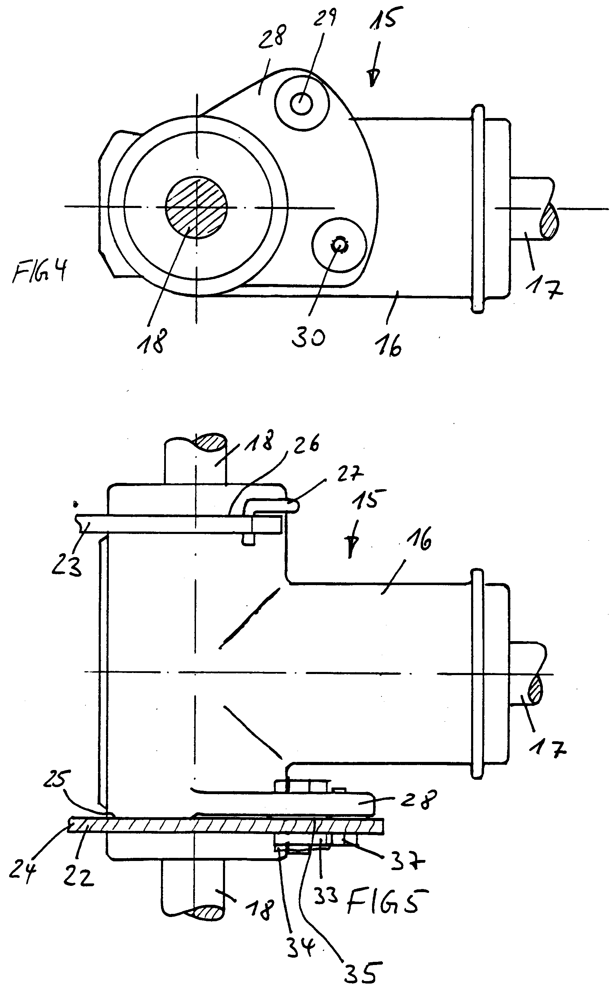

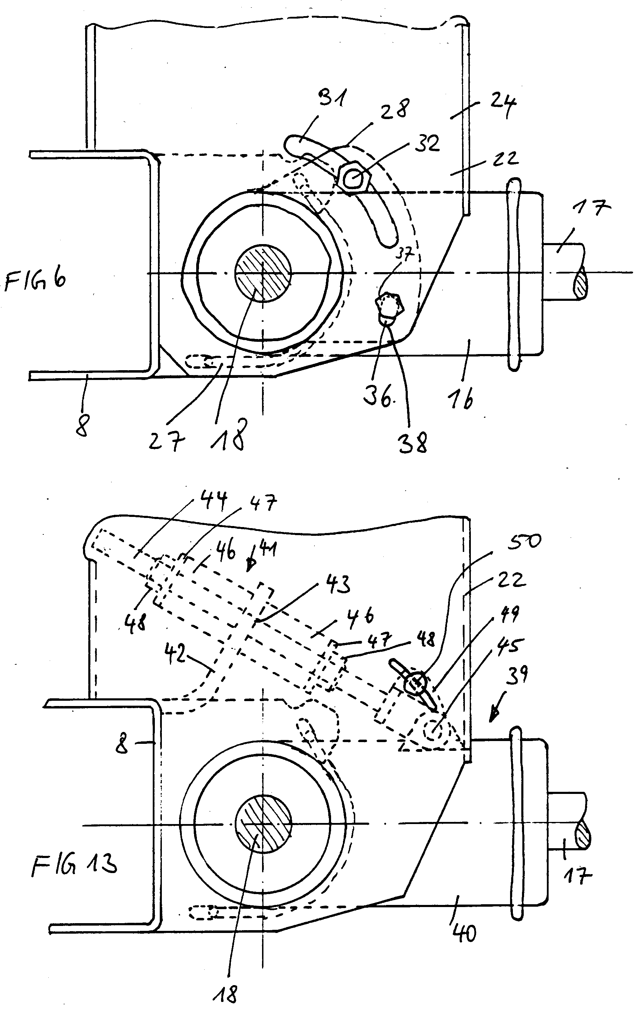

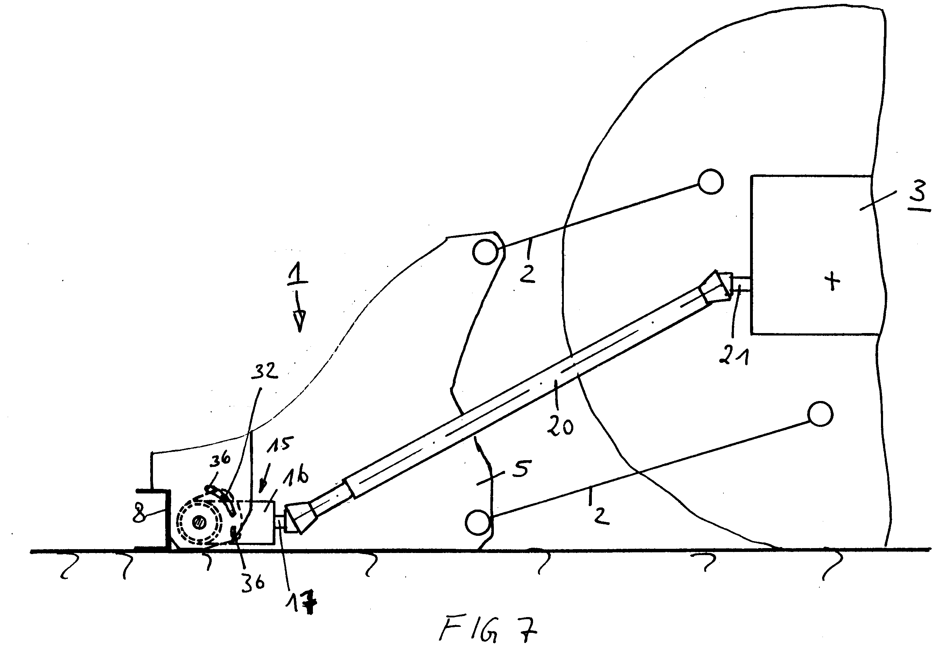

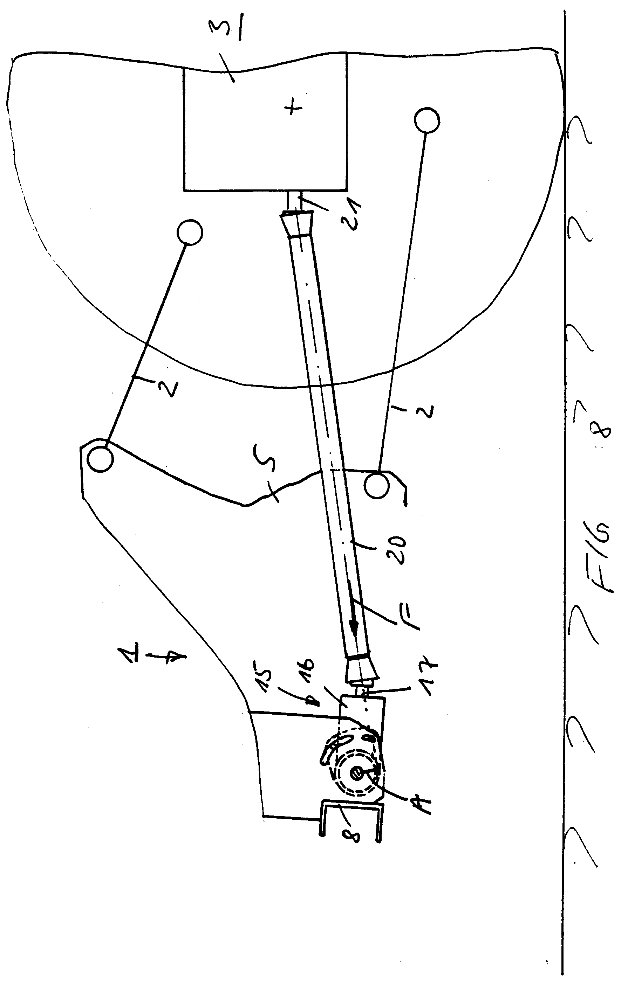

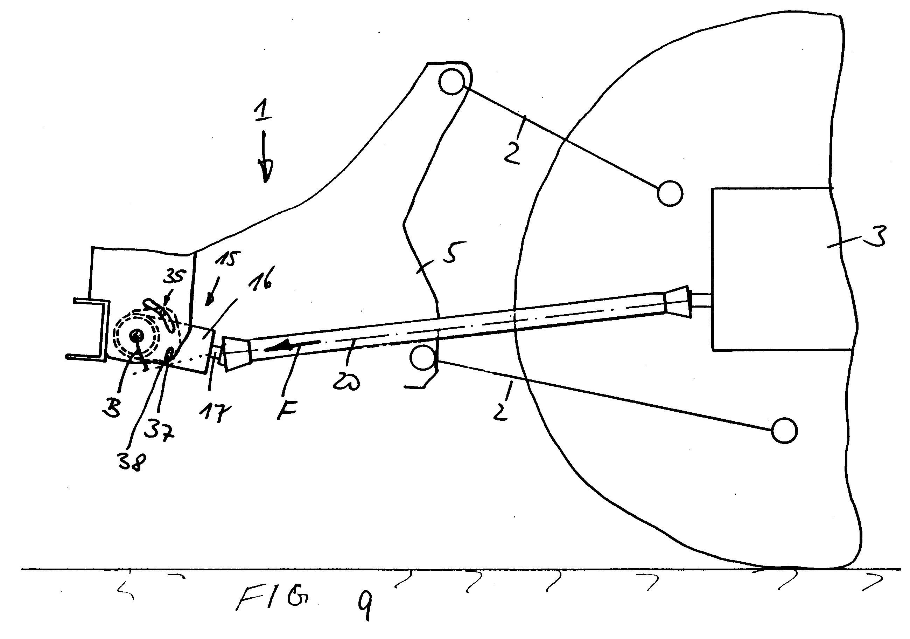

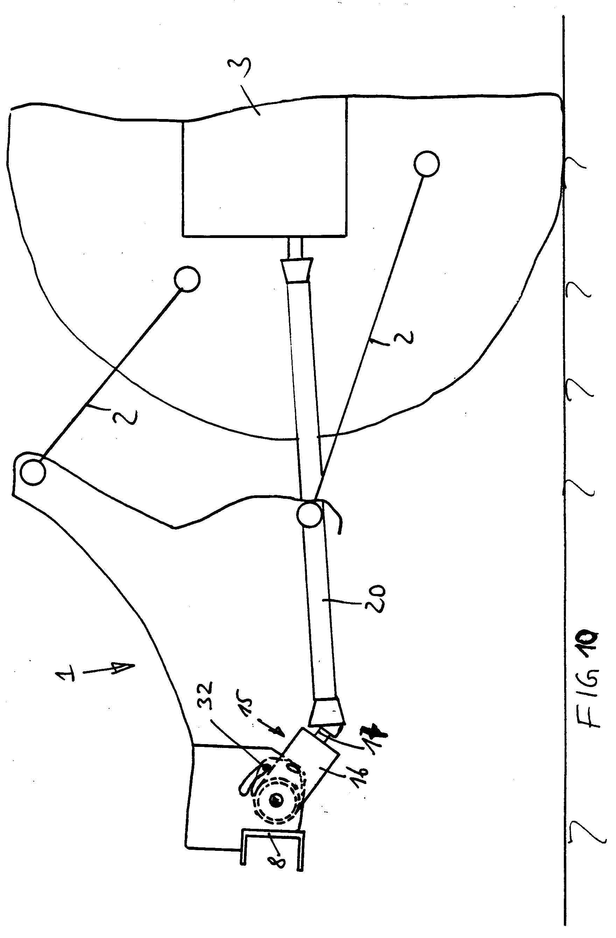

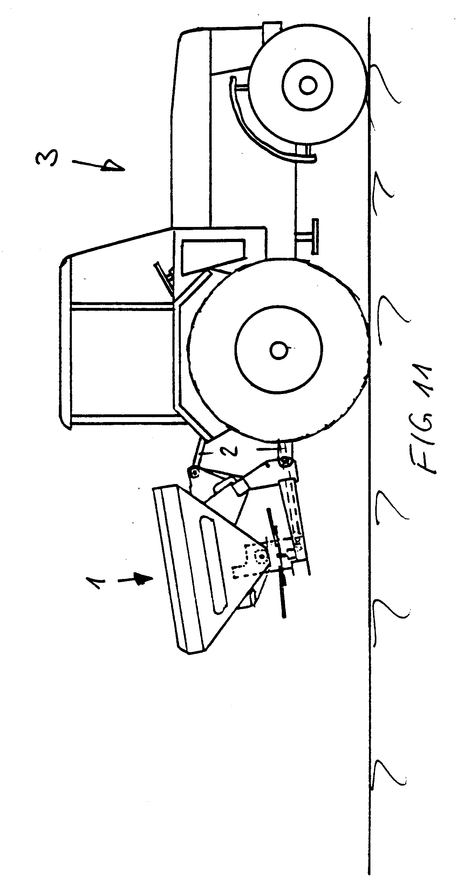

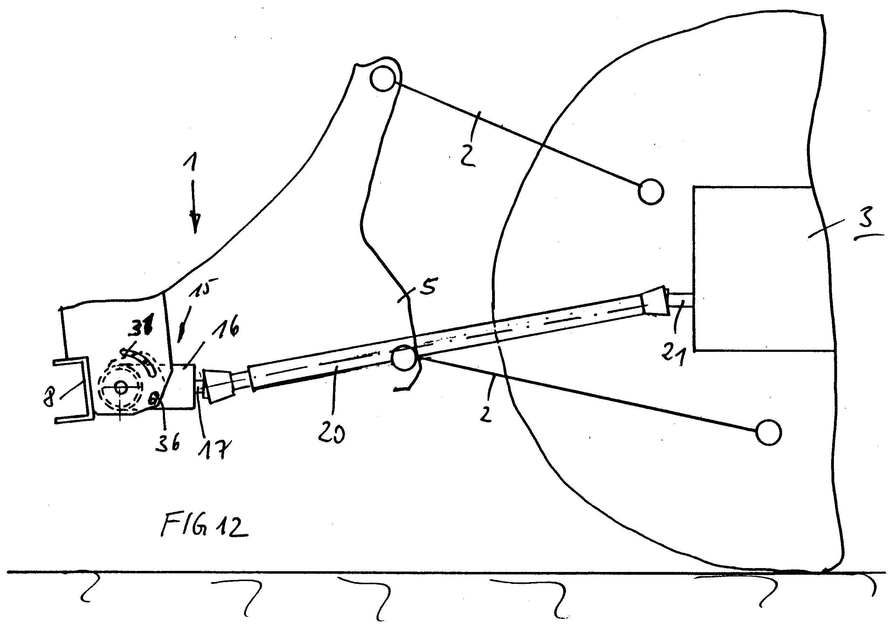

Das Eingangsgetriebe 15 mit dem Eingangsgehäuse 16 und der Eingangswelle 17 ist in den Halterungen 22 und 23 begrenzt schwenkbeweglich um die durch die Wellen 18 verlaufende Drehachse schwenkbar angeordnet. Die Funktionsweise der Sicherungseinrichtung die gemäß den Fig. 1 bis 10 von der Reibschlußverbindung 35 und dem Abscherelement 37 gebildet wird ist folgende:
Der in Fig. 7 auf den Boden gestellte Zentrifugaldüngerstreuer 1 wird an den Dreipunktkraftheber 2 des Ackerschleppers 1 angeschlossen. Anschließend wird die auf der Eingangswelle 17 des Eingangsgetriebes 15 befestigte Gelenkwelle 20 an die Zapfwelle 21 des Ackerschleppers 3 angeschlossen. Wenn nun über den Dreipunktkraftheber 2 der Zentrifugaldüngerstreuer 1 bis zu der in Fig. 8 dargestellten Position angehoben wird, ist die Gelenkwelle 20 ganz zusammengeschoben. Die Gelenkwelle 20 beginnt mit großer Kraft auf die Eingangswelle 17 und somit auf das Eingangsgetriebe 15 zu drücken, wenn die Maschine weiter angehoben wird, da die Gelenkwelle 20, die zwischen der Eingangswelle 17 und der Zapfwelle 21 angeordnet ist, an sich zu lang ist.

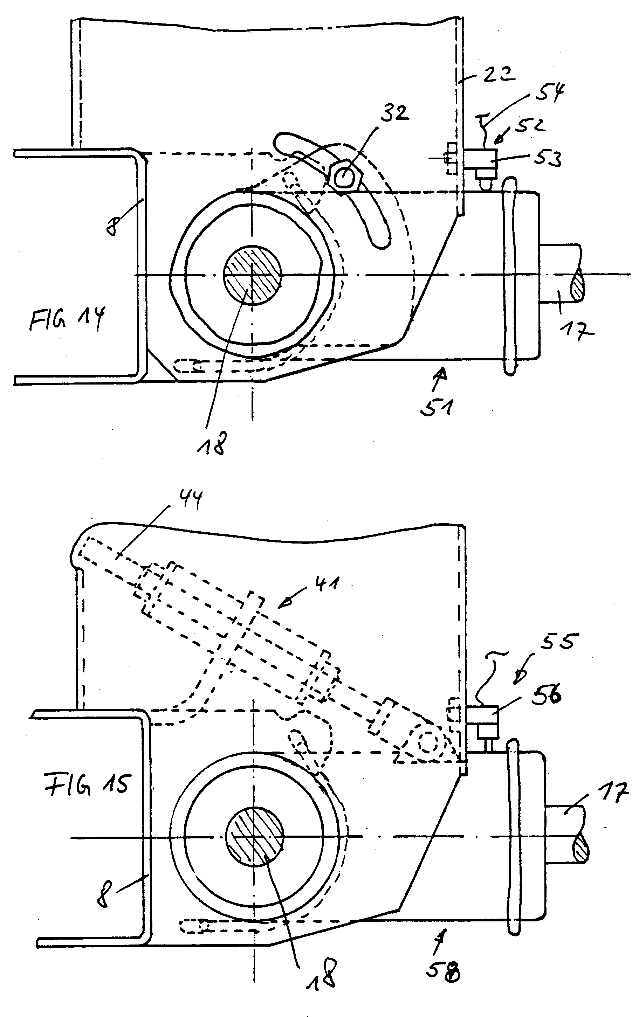

Wenn der Zentrifugaldüngerstreuer 1 aus der in Fig. 8 dargestellten Position weiter bis in die in Fig. 9 dargestellte Position angehoben wird, wird aufgrund der zu langen Gelenkwelle 20 und der hieraus resultierenden auf die Eingangswelle und das Eingangsgetriebe wirkende Kraft F das Eingangsgetriebe 15 in die in Fig. 9 dargestellte Position gegen die Kraft der Reibschlußverbindung 35 verschwenkt. Der Hebelarm A, mit dem die Kraft F, die aus der zu langen Gelenkwelle resultiert, an das Getriebegehäuse 16, entsprechend Fig. 8, angreift ist zu klein. Durch diese Kraft F schwenkt das Eingangsgetriebe 15 zunächst bis zu dem unteren Ende 38 der Langlochbohrung 36, in welches der Abscherstift 37 faßt. In der in Fig. 9 dargestellten Position ist der Hebelarm A gemäß Fig. 8 zu größeren Hebelarm B geworden. Bis zu der in Fig. 9 dargestellten Position des Getriebegehäuses 15, wenn der Abscherstift 37 am unteren Ende 38 der Langlochbohrung zur Anlage kommt, ist kein Teil an der Maschine beschädigt oder zerstört worden. Wenn der Zentrifugaldüngerstreuer 1 in der in Fig. 9 dargestellten Position über die Zapfwelle 21 und die Gelenkwelle 20 angetrieben wird, läuft der Antrieb noch relativ ruhig. Wird jedoch der Zentrifugaldüngerstreuer 1 aus der in Fig. 9 in die in Fig. 10 dargestellte Position angehoben, so wird mit einer relativ geringen Kraft F aufgrund des sich noch weiter vergrößernden Hebelarms B der Abscherstift 37 abgeschert. Das Eingangsgetriebe wird aufgrund der von der Gelenkwelle 20 auf die Eingangswelle 17 einwirkenden Kraft F und des sich verringernden Abstandes zwischen Eingangswelle 17 und der Zapfwelle 21 aufgrund des Anhebens des Zentrifugaldüngerstreuers 1 nach unten geschwenkt. Aufgrund dieses Vorganges schwenkt das Eingangsgetriebe 15 deutlich nach unten und die Gelenkwelle 20 drückt nicht mehr auf das Eingangsgetriebe 15. Das Eingangsgetriebe 15 bleibt so in einer Position hängen, die so ist, daß die Gelenkabwicklung an der Eingangswelle 17 deutlich unter 90° bleibt. Durch das Abscheren der Abscherschraube 37 entsteht ein relativ starker Knall, der den Schlepperfahrer darauf hinweist, daß aufgrund einer zu langen Gelenkwelle 20 das Eingangsgetriebe 15 verschwenkt worden ist. Dieses bedeutet für den Schlepperfahrer, daß er die Gelenkwelle 20 kürzen muß, um "normal" arbeiten zu können.

Wird nun jedoch trotz des durch das Abscherden des Abscherstiftes 37 hervorgerufenen Knalls die Gelenkwelle 20 eingeschaltet, so "rattert" der Antrieb zwar, aber die Gelenkwelle 20 wird nicht zerbrochen.

Bei all diesen Bewegungen schwenkt das Getriebe um die Ausgangswellen 18 des Eingangegetriebes 15. An dem übrigen Antrieb wird keine Veränderung vorgenommen.

Um den Zentrifugaldüngerstreuer wieder in funktionsfähigen Zustand zu versetzen muß der Schlepperfahrer jetzt die Gelenkwelle 20 entsprechend den Bedienungsanleitungen der Gelenkwelle 20 bzw. des Zentrifugaldüngerstreuers 1 auf das entsprechende Maß kürzen. Der Landwirt hätte an sich schon beim unmittelbaren Einbau des Zentrifugaldüngerstreuers überprüfen sollen, ob die Gelenkwelle die vorgeschriebene Länge aufweist. Es ist also, wie bereits vor gesagt, die Gelenkwelle 20 auf die richtige Länge zu kürzen, das Eingangsgetriebe 15 wieder hochzuschwenken und in Normalposition zu bringen und die Abscherschraube zu erneuern. Das ist alles! Zerstört, wurde mit Außnahme der preiswerten Abscherschraube 37 natürlich nichts.

Sollte die Gelenkwelle 20 noch länger gewesen sein und das Eingangsgetriebe 15 noch weiter nach unten verschwenkt worden sein, wie in Fig. 10 dargestellt, so wird die Schraube 32 in der Reibschlußverbindung 35 ebenfalls abgeschert und das Eingangsgetriebe 15 noch weiter nach unten verschwenkt. Immer würde noch kein Maschinen- oder Getriebeteil - bis auf die preiswerten Schrauben 32 und 37 - beschädigt sein. Eine Zerstörung von Getriebeteilen würde hier erst auftreten, wenn dann trotzdem noch die Zapfwelle 21 eingeschaltet würde. Dieses ist jedoch höchst unwahrscheinlich, weil die stärkere Schraube 32 der Reibschlußverbindung 35 mit noch einem größeren Knall als die Abscherschraube 37 abschert.

Gemäß der Fig. 11 und 12 ist der Zentrifugaldüngerstreuer 1 in einer nach hinten geneigten Position an dem Dreipunktkraftheber 2 des Ackerschleppers 1 angeordnet. Um bei einer derartigen schrägen Stellung des Zentrifugaldüngerstreuers 1 eine horizontale Position des Eingangsgetriebes 15 bzw. der Eingangswelle 17 zu erreichen, wird das Eingangsgetriebe 15 gegenüber dem Rahmen 5 der Maschine nach unten verschwenkt, so daß die Eingangswelle 17 eine horizontale Lage erhält und somit parallel zu der horizontal verlaufenden Zapfwelle 21 verläuft, wie in Fig. 12 gezeigt. Hierdurch wird ein Ungleichförmigkeitsgrad durch den Antrieb der Gelenkwelle 20 vermieden. Diese Einstellung des Eingangsgetriebes 15 in unterschiedliche Positionen gegenüber dem Rahmen 5 ist aufgrund der beiden Langlöcher 31 und 36 ohne weiteres möglich. Somit kann also das Eingangsgetriebe 15 mittels der Sicherungseinrichtung in unterschiedlichen Stellungen am Rahmen 5 des Zentrifugaldüngerstreuers 1 fixiert werden.

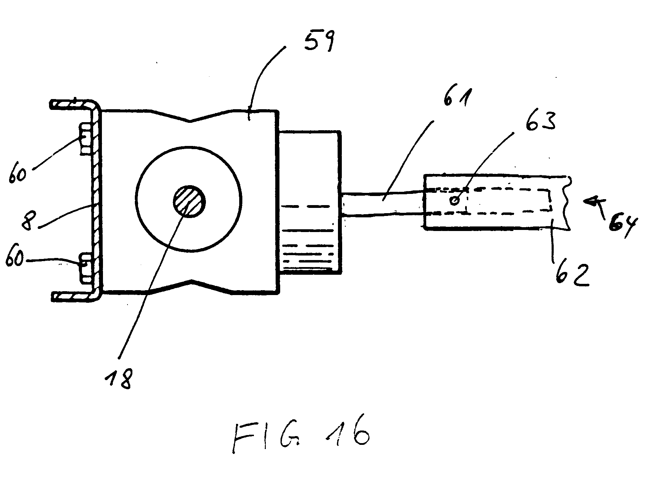

Das Eingangsgetriebe 39 (Fig. 13) mit dem Eingangehäuse 40 und der Eingangswelle 17 und den seitlichen Ausgangswellen 18 unterscheidet sich von dem Eingangsgetriebe 15 gemäß den Fig. 1 bis 12 durch eine andere Ausbildung der ersten Sicherungsstufe der Sicherungseinrichtung. Die erste Stufe der Sicherungseinrichtung ist bei diesem Eingangsgetriebe 39 als federndes Element 41 ausgebildet. Hierzu ist an der Quertraverse 8 die Halterung 42 mit der Bohrung 43 angeordnet. Durch durch Bohrung 43 ist der Schraubbolzen 44 gesteckt, der mit dem Bolzen 45 an dem Eingangsgehäuse 40 angeordnet ist. Auf diesem Bolzen 44 sind auf jeder Seite der Halterung 42 die beiden Gummifedern 46 des federnden Elementes 41 angeordnet. Mittels der Scheiben 47 und der Muttern 48, die auf dem Schraubbolzen 44 angeordnet sind, wird das Eingangsgetriebe 39 in seiner Normalposition gehalten. Zwischen dem Ansatzstück 49 des Schraubbolzens 44 und der Halterung 22 für das Eingangsgetriebe 39 ist die Abschereinrichtung 50 angeordnet, die prinzipiell der Abschereinrichtung 37 gemäß den Fig. 1 bis 12 entspricht. Im Gegensatz zu den Eingangsgetriebe 15 gemäß den Fig. 1 bis 12 kann das Eingangsgetriebe 39 gemäß Fig. 13 gegen die federnden Elemente 41 sowohl nach oben wie nach unten ausweichen.

Das Eingangsgetriebe 51 gemäß Fig. 14 entspricht bis auf die zweite Stufe der Sicherungseinrichtung der Befestigung gemäß den Fig. 1 bis 12. Das Abscherelement 37, welches bei den Fig. 1 bis 12 die zweite Stufe der Sicherungseinrichtung bildet, ist hier als Alarmeinrichtung 52 ausgebildet. Diese Alarmeinrichtung 52 ist als Schalter 53 ausgebildet, welcher über ein Kabel 54 mit einer Signaleinrichtung verbunden ist. In der Normalposition liegt der Schalter 53 an dem Eingangsgehäuse 51 an. Wenn das Eingangsgehäuse 51, wie zu den Fig. 1 bis 12 beschrieben, nach unten geschwenkt wird, so entfernt sich das Eingangsgehäuse 51 von dem Schalter 53, so daß von dem Schalter 53 ein Impuls für die Signaleinrichtung ausgelöst wird. Um diese Alarmeinrichtung auch einsetzen zu können, wenn das Eingangsgehäuse 51 in unterschiedlichen Stellungen am Rahmen 5 in Normalposition angeordnet sein soll, ist der Schalter 53 verstellbar am Rahmen 5 angeordnet.

Das Ausführungsbeispiel gemäß Fig. 15 unterscheidet sich von dem Ausführungsbeispiel gemäß Fig. 13 dadurch, daß die zweite Stufe der Sicherungseinrichtung nicht als Abscherelement 50 sondern als Alarmeinrichtung 55 ausgebildet ist. Diese Alarmeinrichtung 55 weist einen Sensor 56 auf, der über ein Kabel 57 mit einer Signaleinrichtung verbunden ist. Wenn das Eingangsgehäuse 58 aus der in Fig. 15 dargestellten Normalposition verschwenkt wird, gibt der Sensor 56 ein Signal ab, durch welches die Signaleinrichtung ausgelöst wird.

Bei dem Ausführungsbeispiels gemäß Fig. 16 ist das Eingangsgetriebe 59 mittels der Schrauben 60 an der Quertraverse 8 angeschraubt. Jedes Eingangsgetriebe 59 ist starr an der Quertraverse 8 befestigt. Um nun dennoch Beschädigungen an dem Eingangsgetriebe 59 bzw. der Eingangswelle 61 sowie der gesamten Maschine zu vermeiden, ist das Kupplungsstück 62 der Gelenkwelle 20 verschiebbar auf der Eingangswelle 61 angeordnet. Die Kraftübertragung und die Fixierung des Kupplungsstückes 62 auf der Eingangswelle 61 erfolgt durch den Abscherstift 63. Wenn eine Kraft aufgrund einer zu langen Gelenkwelle 20 in Pfeilrichtung 64 auf das Kupplungsstück 62 ausgeübt wird, schert der Abscherstift 63 ab, so daß das Kupplungsstück 62 der Gelenkwelle 20 in axialer Richtung in Richtung des Eingangsgetriebes 59 auf der Welle 61 verschoben wird. Wenn dann die Gelenkwelle 20 gekürzt worden ist, muß das Kupplungsstück 62 wieder in seine Ausgangsposition gebracht werden und der abgescherte Abscherstift 63 durch einen neuen ersetzt werden.

## Patentansprüche

1. Landwirtschaftliche Maschine (1) mit einem eine Eingangswelle (17) aufweisenden Eingangsgehäuse (16), die von einer Kraftwelle eines Schleppers über eine Gelenkwelle (20) antreibbar ist, wobei das maschinenseitige Eingangsgehäuse (16) ausweichbar angeordnet ist und mittels einer Sicherungseinrichtung in Normalstellung gehalten wird, dadurch gekennzeichnet, daß die Sicherungseinrichtung mehrstufige, vorzugsweise zweistufige Sicherungsmittel (35, 37; 41, 50; 41, 56; 32, 52) aufweist.

2. Maschine nach Anspruch 1, dadurch gekennzeichnet, daß die erste Stufe der Sicherungseinrichtung von einer Reibschlußverbindung (35) und die zweite Stufe der Sicherungseinrichtung von zumindest einem Abscherelement (37) gebildet wird.

3. Maschine nach Anspurch 1, dadurch gekennzeichnet, daß die erste Stufe der Sicherungseinrichtung von einem federnden Element (41) und die zweite Stufe von zumindest einem Abscherelement (50) gebildet wird.

4. Maschine nach Anspruch 1, dadurch gekennzeichnet, daß die erste Stufe der Sicherungseinrichtung von einer Reibschlußverbindung (37) oder einem federnden Element (41) und die zweite Stufe von einer Alarmeinrichtung (52,55) gebildet wird.

5. Maschine nach Anspruch 1, dadurch gekennzeichnet, daß die Reibschlußverbindung (37) zumindest eine Schraube (32) aufweist, welche das Eingangsgehäuse mit dem Rahmen (5) der Maschine verbindet.

6. Maschine nach einem oder mehreren der vorstehenden Ansprüche, dadurch gekennzeichnet, daß die Schraube (32) der Reibschlußverbindung (37) in ein Langloch (31) faßt, welches sich im Eingangsgehäuse oder im Rahmen (5) befindet.

7. Maschine nach einem oder mehreren der vorstehenden Ansprüche, dadurch gekennzeichnet, daß das Abscherelement (37) in ein Langloch (36) faßt, welches sich im Eingangsgehäuse oder im Rahmen (5) befindet.

8. Maschine nach einem oder mehreren der vorstehenden Ansprüche, dadurch gekennzeichnet, daß für das Verbindungselement der Reibschlußverbindung (37) und/oder für das Abscherelement ein Langloch oder mehrere Bohrungen vorgesehen sind.

9. Maschine nach einem oder mehreren der vorstehenden Ansprüche, dadurch gekennzeichnet, daß das Eingangsgehäuse (16) mittels der Sicherungeinrichtung in unterschiedlichen Stellungen am Rahmen (5) der Maschine zu fixieren ist.

10. Maschine nach Anspruch 9, dadurch gekennzeichnet, daß die Sicherungseinrichtung als Reibschlußverbindung (37) ausgebildet ist.

11. Maschine nach einem oder mehreren der vorstehenden Ansprüche, dadurch gekennzeichnet, daß zusätzlich zu der Reibschlußverbindung (37) zumindest ein Abscherelement (37) vorgesehen ist.

12. Maschine nach einem oder mehreren der vorstehenden Ansprüche, dadurch gekennzeichnet, daß die Sicherungseinrichtung als Federelement (41) mit zumindest einer Stellschraube (44) und/oder Stellmutter (48) ausgebildet ist.

13. Maschine nach einem oder mehreren der vorstehenden Ansprüche, dadurch gekennzeichnet, daß daß zwischen dem Rahmen und dem Eingangsgehäuse ein Anschlagelement angeordnet ist, welches die Schwenkbewegung des Eingangsgehäuses nach unten begrenzt, und daß zwischen dem Rahmen und dem Eingangsgehäuse eine Feder angeordnet ist, welches das Eingangsgehäuse gegen den Anschlag drückt.

14. Maschine nach Anspruch 13, dadurch gekennzeichnet, daß der Anschlag als Abscherelement ausgebildet ist.

15. Maschine nach einem oder mehreren der vorstehen dem Ansprüche, dadurch gekennzeichnet, daß das Eingangsgehäuse mit einem Schnellverschluß am Rahmen angeordnet ist.

16. Maschine nach einem oder mehreren der vorstehenden Ansprüche, dadurch gekennzeichnet, daß am Rahmen eine Halterung mit einer Bohrung angeordnet ist, daß in diese Halterung das Eingangsgehäuse faßt, daß am Rahmen eine eine U-förmige Aufnahmeöffnung aufweisende Lasche angeordnet ist, in welche das Eingangsgehäuse faßt, und in welcher das Eingangsgehäuse mit einer Spange, die vorzugsweise als Federspange ausgebildet ist, gehalten wird.

17. Maschine nach Anspruch 1, dadurch gekennzeichnet, daß zwischen der Gelenkwelle (20) und der Eingangswelle (61) ein in axialer Richtung der Welle (61) verschiebbares Element (62) angeordnet ist, welches mittels eines Abscherstiftes (63) auf der Eingangswelle (61) festgesetzt ist.

18. Maschine nach Anspruch 17, dadurch gekennzeichnet, daß das Anschlußstück (62) der Gelenkwelle (20) verschiebbar auf der Eingangswelle (61) angeordnet ist.

## Claims

1. Agricultural machine (1) with an input housing (16) having an input shaft (17), which can be driven by a power shaft of a tractor via a drive shaft (20), the input housing (16) on the machine side being arranged movable to one side and being held in its normal position by means of a safety device,
**characterised in that**
the safety device has multiple-stage safety means (35, 37; 41, 50; 41, 56, 32, 52), preferably a two-stage safety means.

2. Machine according to claim 1,
**characterised in that**
the first stage of the safety device is formed by a frictional grip connection (35) and the second stage of the safety device by at least one shearing member (37).

3. Machine according to claim 1,
**characterised in that**
the first stage of the safety device is formed by a spring member (41) and the second stage by at least one shearing member (50).

4. Machine according to claim 1,
**characterised in that**
the first stage of the safety device is formed by a frictional grip connection (37) or a spring member and the second stage by an alarm device (52, 55).

5. Machine according to claim 1,
**chaaracterised in that**
the frictional grip connection (37) has at least one screw (32) which connects the input transmission with the frame (5) of the machine.

6. Machine according to one or more of the above claims,
**characterised in that**
the screw (32) of the frictional grip connection (37) engages in an elongate slot (31) located in the input housing or in the frame (5).

7. Machine according to one or more of the above claims,
**characterised in that**
the shearing member (37) engages in an elongate slot (36) located in the input housing or in the frame (5).

8. Machine according to one or more of the above claims,
**characterised in that**
an elongate slot or a plurality of bore holes are provided for the connecting member of the frictional grip connection (37) and/or for the shearing member.

9. Machine according to one or more of the above claims,
**characterised in that**
the input housing (16) is to be fixed by means of the safety device in different positions on the frame (5) of the machine.

10. Machine according to claim 9,
**characterised in that**
the safety device is designed as a frictional grip connection (37).

11. Machine according to one or more of the above claims,
**characterised in that**
in addition to the frictional grip connection (37), at least one shearing member (37) is provided.

12. Machine according to one or more of the above claims,
**characterised in that**
the safety device is designed as a spring member (41) with at least one adjusting screw (44) and/or adjusting nut (48).

13. Machine according to one or more of the above claims,
**characterised in that**
between the frame and the input housing a stopping member is arranged which limits the downward swing of the input housing, and in that between the frame and the input housing a spring is arranged which presses the input housing against the stop.

14. Machine according to claim 13,
**characterised in that**
the stop is designed as a shearing member.

15. Machine according to one or more of the above claims,
**characterised in that**
the input housing is disposed on the frame with a quick acting closure.

16. Machine according to one or more of the above claims,
**characterised in that**
a mounting support with a bore hole is arranged on the frame, that the input transmission engages in this mounting support, in that on the frame is arranged a bracket with a U-shaped receiving aperture, in which the input housing engages and in which the input housing is held with a clasp, which is by preference designed as a spring clasp.

17. Machine according to claim 1,
**characterised in that**
between the drive shaft (20) and the input shaft (61), a member (62) is arranged which can be moved in the axial direction of the shaft (61) and which is secured to the input shaft (61) by means of a shear pin (63).

18. Machine according to claim 17,
**characterised in that**
the connector (62) of the drive shaft (20) is disposed movable on the input shaft (61).

## Revendications

1. Machine agricole (1) comportant un carter d'entrée (16) avec un arbre d'entrée (17) entraîné par la prise de force d'un tracteur par l'intermédiaire d'un arbre à cardans (20), le carter d'entrée (16) du côté de la machine pouvant s'échapper et étant maintenu en position normale à l'aide d'une installation de sécurité,
caractérisée en ce que
l'installation de sécurité comporte des moyens de sécurité à plusieurs niveaux, de préférence à deux niveaux, (35, 37, 41, 50, 41, 56, 32, 52).

2. Machine selon la revendication 1,
caractérisée en ce que
le premier niveau de l'installation de sécurité est formé par une liaison à friction (35) et le second niveau de l'installation de sécurité est formé par au moins un élément cisaillable (37).

3. Machine selon la revendication 1,
caractérisée en ce que
le premier niveau de l'installation de sécurité est formé par un élément élastique (41), et le second niveau est formé par au moins un élément cisaillable (50).

4. Machine selon la revendication 1,
caractérisée en ce que
le premier niveau de l'installation de sécurité est formé par une liaison par friction (37) ou par un élément élastique (41), et le second niveau est formé par une installation d'alarme (52, 55).

5. Machine selon la revendication 1,
caractérisée en ce que
la liaison par friction (37) comprend au moins une vis (32) reliant le carter d'entrée au cadre (5) de la machine.

6. Machine selon l'une ou plusieurs des revendications précédentes,
caractérisée en ce que
la vis (32) de la liaison par friction (37) vient prendre dans un trou oblong (31) du carter d'entrée ou du châssis (5).

7. Machine selon l'une ou plusieurs des revendications précédentes,
caractérisée en ce que
l'élément de cisaillement (37) prend dans un trou oblong (36) prévu dans le carter d'entrée ou dans le châssis (5).

8. Machine selon l'une ou plusieurs des revendications précédentes,
caractérisée par
un trou oblong ou plusieurs perçages pour l'élément de liaison de la liaison par friction (37) et/ou l'élément de cisaillement.

9. Machine selon l'une ou plusieurs des revendications précédentes,
caractérisée en ce que
le carter d'entrée (16) se bloque dans différentes positions sur le châssis (5) de la machine par l'intermédiaire de l'installation de sécurité.

10. Machine selon la revendication 9,
caractérisée en ce que
l'installation de sécurité est en forme de liaison par friction (37).

11. Machine selon l'une ou plusieurs des revendications précédentes,
caractérisée en ce qu'
en plus de la liaison par friction (37), il est prévu au moins un élément de cisaillement (37).

12. Machine selon l'une ou plusieurs des revendications précédentes,
caractérisée en ce que
l'installation de sécurité est réalisée sous la forme d'un élément à ressort (41) avec au moins une vis de réglage (44) et/ou un écrou de réglage (48).

13. Machine selon l'une ou plusieurs des revendications précédentes,
caractérisée en ce qu'
entre le châssis et le carter d'entrée, il est prévu un élément de butée limitant vers le bas le mouvement de pivotement du carter d'entrée, et un ressort est prévu entre le châssis et le carter d'entrée pour pousser le carter d'entrée contre la butée.

14. Machine selon la revendication 13,
caractérisée en ce que
la butée est en forme d'élément de cisaillement.

15. Machine selon l'une ou plusieurs des revendications précédentes,
caractérisée en ce que
le carter d'entrée comporte un moyen de liaison rapide qui le monte sur le châssis.

16. Machine selon l'une ou plusieurs des revendications précédentes,
caractérisée par
un moyen de fixation muni d'un perçage prévu sur le châssis, le carter d'entrée vient prendre dans ce moyen de fixation, et le châssis comporte une patte ayant une ouverture en forme de U dans laquelle vient prendre le carter d'entrée et qui maintient le carter d'entrée, avec une pince, de préférence sous la forme d'une pince à ressort.

17. Machine selon la revendication 1,
caractérisée en ce qu'
entre l'arbre à cardans (20) et l'arbre d'entrée (61) il est prévu un élément (62) coulissant dans la direction axiale de l'arbre (61) et qui est fixé sur l'arbre d'entrée (61) par l'intermédiaire d'une goupille de cisaillement (63).

18. Machine selon la revendication 17,
caractérisée en ce que
la pièce de raccordement (62) de l'arbre à cardans (20) est montée coulissante sur l'arbre d'entrée (61).
